# EUROPÄISCHE PATENTSCHRIFT

(11) **EP 3 819 554 B1**
(45) Veröffentlichungstag und Bekanntmachung des Hinweises auf die Patenterteilung: **06.09.2023**
(21) Anmeldenummer: 20205190.0
(22) Anmeldetag: 02.11.2020
(51) Int. Cl.: F24F 13/28, F24F 12/00, F24F 7/08

(54) **LÜFTUNGSVORRICHTUNG ZUR LÜFTUNG EINES WOHNRAUMS**
VENTILATION DEVICE FOR VENTILATION OF A LIVING SPACE
DISPOSITIF DESTINÉ À L'AÉRATION D'UN ESPACE HABITABLE

(30) Priorität: 08.11.2019 DE 102019130219
(43) Veröffentlichungstag der Anmeldung: 12.05.2021
(73) Patentinhaber: Vaillant GmbH, 42859 Remscheid (DE)
(72) Erfinder: Knoop, Thomas, 35510 Butzbach (DE); Billek, Ramon, 42857 Remscheid (DE)
(74) Vertreter: Popp, Carsten

(56) Entgegenhaltungen:
- WO-A2-2013/015595
- DE-U1-202014 010 049
- US-A1- 2003 150 196
- US-A1- 2014 096 494

## Beschreibung

Die Erfindung betrifft eine Lüftungsvorrichtung zur Lüftung eines Wohnraums.

Lüftungsgeräte zur Wohnungslüftung weisen in der Regel einen einzelnen Feinfilter zur Filterung der Außenluft sowie einen Grobfilter zur Filterung der Abluft auf. Dabei sind der Feinfilter in einem Luft von außen hin zu einem Wohnraum führenden Zuluftkanal des Lüftungsgeräts und der Grobfilter in einem Abluft von dem Wohnraum nach außen führenden Abluftkanal des Lüftungsgeräts angeordnet. Diese Filter sind somit in voneinander verschiedenen Kanälen des Lüftungsgeräts angeordnet.

Der Feinfilter muss von Zeit zu Zeit ausgetauscht werden, da er sich mit dem Betrieb zusetzt, wodurch der Druckverlust über den Feinfilter ansteigt. Dies führt insgesamt zu einem höheren Energieverbrauch des Lüftungsgeräts, da zur Überwindung des höheren Druckverlusts eine entsprechend höhere (elektrische) Pumpleistung einer Pumpe des Lüftungsgeräts erforderlich ist.

Die Dauer bis der Feinfilter ausgetauscht werden muss wird auch als Standzeit des Feinfilters bezeichnet. Die Standzeit des Feinfilters bestimmt in der Regel die Wartungsintervalle des Lüftungsgeräts. Somit könnten längere Wartungsintervalle erreicht werden, wenn die Standzeit des Feinfilters erhöht werden könnte. Dadurch könnten die Wartungskosten über den gesamten Lebenszyklus des Lüftungsgerätes betrachtet insgesamt reduziert werden.

Zudem können bei heutzutage in Lüftungsgeräten zur Wohnungslüftung verbauten Filtern teilweise Leckageströme von an dem Filter vorbei strömender Luft beobachtet werden. Dies ist insbesondere dadurch bedingt, dass Filterabdichtungen bei diesem Anwendungsgebiet häufig nicht vorhanden sind, da sie zum einen teuer sind und zum anderen den Ein- und Ausbau des Filters erschweren. Entsprechende Leckageströme reduzieren jedoch den Wirkungsgrad bzw. die Filterwirkung der Filter.

Aus der US 2014/096494 A1 ist ein Luftfilterrahmen bekannt. Aus der DE 20 2014 010049 U1 ist eine Abluftreinigungsanlage für Stallanlagen bekannt. Aus der US 2003/150196 A1 ist ein adaptiver Filter bekannt.

Es ist daher Aufgabe der Erfindung, eine Lüftungsvorrichtung bereitzustellen, welche die im Zusammenhang mit dem Stand der Technik geschilderten Probleme zumindest teilweise löst. Insbesondere soll die Lüftungsvorrichtung insgesamt möglichst effizient und mit möglichst geringem Wartungsaufwand betrieben werden können. Darüber hinaus soll insbesondere eine Lüftungsvorrichtung mit höherer Standzeit des Feinfilters angegeben werden. Gleichwohl soll in der Lüftungsvorrichtung eine möglichst gute Filterwirkung erreichbar sein.

Diese Aufgabe wird mit einer Lüftungsvorrichtung gemäß den Merkmalen des Anspruchs 1 gelöst. Vorteilhafte Ausgestaltungen ergeben sich durch die Merkmale der abhängigen Ansprüche.

Hierzu trägt eine Lüftungsvorrichtung zur Lüftung eines Wohnraums bei, umfassend mindestens einen durchströmbaren Kanal, mindestens eine Filteraufnahme und mindestens eine durchströmbare Filtereinrichtung, wobei die Filtereinrichtung derart zumindest teilweise in die Filteraufnahme einbringbar ist, dass sie im eingebrachten Zustand einen durchströmbaren Querschnitt des Kanals überspannt, wobei die Filtereinrichtung mindestens eine erste Zone und mindestens eine sich davon unterscheidende zweite Zone aufweist, wobei die zweite Zone die Filteraufnahme während eines Einbringens und im eingebrachten Zustand kontaktiert und wobei die zweite Zone mit einer höheren Flexibilität ausgestaltet ist als die erste Zone.

Dadurch, dass die Filtereinrichtung mindestens zwei verschiedene Zonen aufweist, können unterschiedliche Funktionen mit den Zonen realisiert werden. So kann beispielsweise der Fokus bei der Auslegung der ersten Zone auf einer guten Filterwirkung der Filtereinrichtung, insbesondere dem Zurückhalten von ungewünschten Partikeln und/oder Gegenständen in der Strömung liegen. Demgegenüber kann der Fokus bei der Auslegung der zweiten Zone auf einer anderen Funktion, wie beispielsweise einer möglichst einfachen Ein- und Ausbaubarkeit der Filtereinrichtung liegen. Alternativ oder kumulativ kann die zweite Zone auch dazu genutzt werden (unabhängig von der Filterfunktion der ersten Zone) eine Dichtfunktion bereitzustellen, um Leckageströme an der Filtereinrichtung vorbei zu reduzieren oder sogar zu vermeiden.

Dadurch, dass die zweite Zone die Filteraufnahme kontaktiert kann eine vorteilhafte Dichtfunktion bereitgestellt werden, die bei heutzutage in Lüftungsgeräten zur Wohnungslüftung verbauten Filtern zu Gunsten einer einfacheren Ein- und Ausbaubarkeit des Filters in der Regel nicht realisiert wird. Insbesondere kontaktiert die zweite Zone die Filteraufnahme so, dass im Bereich der Kontaktstelle eine Dichtwirkung erreichbar ist bzw. die Filtereinrichtung zumindest teilweise gegenüber der Filteraufnahme abgedichtet ist. Vorzugsweise kontaktiert die zweite Zone die Filteraufnahme so, dass zwischen der Filteraufnahme und der Filtereinrichtung ein Leckagestrom reduziert oder sogar blockiert wird. Dies bedeutet mit anderen Worten insbesondere, dass ein (sonst möglicher) zwischen der Filteraufnahme und der Filtereinrichtung hindurchströmender Leckagestrom reduziert oder sogar blockiert wird.

Dadurch, dass während des (zumindest teilweisen) Einbringens der Filtereinrichtung in die Filteraufnahme und im eingebrachten Zustand von den zwei Zonen (nur) die zweite Zone die Filteraufnahme kontaktiert und dass die zweite Zone mit einer höheren Flexibilität ausgestaltet ist als die erste Zone kann in vorteilhafter Weise erreicht werden, dass die Filtereinrichtung einfacher in die Filteraufnahme ein und wieder aus dieser ausgebaut werden kann, als dies möglich wäre, wenn die Filtereinrichtung keine entsprechende zweite Zone hätte.

Somit erlaubt die hier vorgestellte Lösung in vorteilhafter Weise, dass durch den Kontakt zwischen zweiter Zone und Filteraufnahme eine Filterabdichtungen bereitgestellt werden kann, sodass eine möglichst gute Filterwirkung erreichbar ist, wodurch die Lüftungsvorrichtung insgesamt möglichst effizient betrieben werden kann. Gleichwohl kann die Filtereinrichtung durch die Flexibilität der zweiten Zone möglichst einfach ein- und ausgebaut werden, wodurch die Lüftungsvorrichtung insgesamt mit reduziertem Wartungsaufwand betrieben werden kann.

Bei der Lüftungsvorrichtung zur Lüftung eines Wohnraums kann es sich insbesondere um ein Wandgerät zur Wohnraumlüftung handeln. Dies betrifft mit anderen Worten insbesondere ein an einer Wand eines Wohnraums montierbares Gerät, welches insbesondere einen Zuluftkanal und einen (davon getrennten) Abluftkanal aufweist, die insbesondere beide in der Umgebung, d.h. außerhalb des Wohnraums (z.B. an einer Gebäudeaußenwand) enden bzw. münden. Somit kann über den Zuluftkanal frische Luft aus der Umgebung in die Lüftungsvorrichtung und darüber in den Wohnraum gelangen. Weiterhin kann über den Abluftkanal Luft aus dem Wohnraum in die Umgebung abgeführt werden.

Der mindestens eine durchströmbare Kanal kann (dementsprechend) zumindest einen Zuluftkanal und einen Abluftkanal umfassen. Diese können jeweils mit einem Rohr oder einem Rohrleitungssystem gebildet sein. Es ist mindestens eine durchströmbare Filtereinrichtung vorgesehen. Bei dieser kann es sich beispielsweise um einen Grobfilter (bzw. Vorfilter), einen Feinluftfilter oder einen Abluftfilter handeln. Es können auch mehrere dieser Filtereinrichtungen in einer Lüftungsvorrichtung vorgesehen sein. Bevorzugt sind alle drei dieser Filter in der Lüftungsvorrichtung vorgesehen, wobei der Grobfilter (bzw. Vorfilter) und der Feinluftfilter in dem Zuluftkanal und der Abluftfilter in dem Abluftkanal angeordnet sind. Der Feinluftfilter dient dabei in der Regel als Staubfilter und/oder Pollenfilter, um insbesondere eine bestmögliche Raumluftqualität und/oder Entlastung für Allergiker ermöglichen zu können. Der Grobfilter (bzw. Vorfilter) dient insbesondere dazu größere Partikel oder Gegenstände bereits vor Erreichen des Feinfilters in der Strömung zurückzuhalten, um so eine hohe Belastung oder sogar Beschädigung des Feinfilters möglichst zu vermeiden. Zudem kann durch das Vorsehen eines Grobfilters bzw. Vorfilters in der Regel die Standzeit des Feinfilters vorteilhaft erhöht werden. Der Abluftfilter ist in der Regel ebenfalls ein Grobfilter oder in der Art eines Grobfilters gebildet. Er dient vordergründig dazu, einen ggf. vorgesehenen Wärmetauscher vor Beschädigungen durch aus dem Wohnraum kommenden Partikeln oder Gegenständen zu bewahren.

Weiterhin ist mindestens eine Filteraufnahme vorgesehen. Die Filteraufnahme kann beispielsweise mit U-förmigen Profilen gebildet sein, die so (z. B. in der Art eines zumindest zwei- oder dreiseitigen Rahmens) angeordnet sind, dass die Filtereinrichtung darin eingeschoben und/oder in der Art von Schienen geführt werden kann. In diesem Zusammenhang können die U-förmigen Profile so ausgerichtet sein, dass ihre offenen Seiten jeweils nach innen weisen. Die Filteraufnahme kann alternativ aber auch mit anderen Komponenten gebildet sein, die (ggf. gemeinsam) einen Spalt oder Kanal bilden, in den die Filtereinrichtung zumindest teilweise eingebracht, insbesondere eingeschoben werden kann. Denkbar ist in diesem Zusammenhang auch, dass die Filteraufnahme (zumindest teilweise) von einem Abschnitt der Kanalinnenwand des Kanals gebildet wird.

Die Filtereinrichtung ist derart zumindest teilweise in die Filteraufnahme einbringbar ist, dass sie im eingebrachten Zustand einen durchströmbaren Querschnitt des Kanals (vollflächig) überspannt. Insbesondere ist die Filtereinrichtung dabei so ausgerichtet, dass eine vordere Stirnseite (Anströmseite) und/oder eine hintere Stirnseite (Abströmseite) der Filtereinrichtung im Wesentlichen senkrecht auf der Strömungsrichtung bzw. der Kanalverlaufsrichtung steht.

Die Filtereinrichtung weist mindestens eine erste Zone und mindestens eine sich davon unterscheidende zweite Zone auf. Die Zonen betreffen dabei vorzugsweise (flächige) Abschnitte einer Querschnittsfläche der Filtereinrichtung. Die Querschnittsfläche liegt dabei insbesondere in einer Ebene, die senkrecht auf der Strömungsrichtung bzw. der Kanalverlaufsrichtung steht.

Die zweite Zone kontaktiert die Filteraufnahme während eines Einbringens und im eingebrachten Zustand. Durch diesen Kontakt übernimmt die zweite Zone insbesondere eine Dichtfunktion. Dabei kann grundsätzlich ein linienförmiger oder flächiger Kontakt realisiert werden. Insbesondere im Falle einer Bürstendichtung ist jedoch alternativ oder kumulativ auch eine Vielzahl von punktförmigen Kontaktstellen denkbar, von denen insbesondere viele benachbarte Kontaktstellen in einer gemeinsamen Ebene enden, sodass diese ggf. insgesamt eine Art flächigen Kontakt bilden.

Die zweite Zone ist mit einer höheren Flexibilität ausgestaltet als die erste Zone. Insbesondere ist die zweite Zone mit einem Material gebildet, das einer höheren Flexibilität und/oder Elastizität aufweist als das Material, mit dem die erste Zone gebildet ist. Dadurch kann die Filtereinrichtung leichter in die Filteraufnahme eingebracht und ggf. wieder aus dieser entnommen werden.

Nach einer vorteilhaften Ausgestaltung wird vorgeschlagen, dass die Filtereinrichtung im Bereich der zweiten Zone einen höheren Strömungswiderstand aufweist als im Bereich der ersten Zone. Dies kann insbesondere dann vorteilhaft sein, wenn die erste Zone einen Grobfilter oder Vorfilter bildet, z.B. in der Art eines grobmaschigen Geflechts oder Gitters bildet. In diesem Zusammenhang kann der höhere Strömungswiderstand der zweiten Zone bewirken, dass die Strömung grundsätzlich durch das die erste Zone (den als Filter wirkenden Teil) strömen muss. Der Strömungswiderstand der zweiten Zone ist jedoch bevorzugt so eingestellt, dass die Strömung (dann) durch die zweite Zone strömen kann, wenn die erste Zone bereits zu einem Großteil verstopft oder bedeckt ist. Somit kann eine möglichst durchgehende Durchströmbarkeit ermöglicht werden.

Es ist jedoch auch denkbar, dass die Filtereinrichtung im Bereich der zweiten Zone eine höhere Filterdurchlässigkeit (bzw. einen geringeren Strömungswiderstand) aufweist als im Bereich der ersten Zone. Dies kann insbesondere dann vorteilhaft sein, wenn die erste Zone einen Feinluftfilter zum Filtern von Staub- und/oder Pollen bildet.

Nach einer weiteren vorteilhaften Ausgestaltung wird vorgeschlagen, dass die erste Zone eine innere Zone und die zweite Zone eine äußere Zone ist. Die Begriffe "innen" und "außen" beziehen sich im Sinne dieser Beschreibung in der Regel auf eine Zentrumsachse der Filtereinrichtung, welche die vordere Stirnseite (Anströmseite) und die hintere Stirnseite (Abströmseite) durchdringt. Insbesondere umgibt die zweite Zone die erste Zone zumindest teilweise oder sogar vollständig.

Erfindungsgemäß wird vorgeschlagen, dass die Filtereinrichtung im Bereich der ersten Zone mit mindestens einem Filterelement und im Bereich der zweiten Zone mit mindestens einem Dichtelement gebildet ist. Vorzugsweist überspannt das Filterelement dabei mindestens 70% oder sogar mindestens 80% der Querschnittsfläche (senkrecht zur Strömungsrichtung) der Filtereinrichtung. Weiterhin bevorzugt ist das mindestens eine Dichtelement dabei (entlang einer Schmalseite des Filterelements) umlaufend um das Filterelement angeordnet.

Nach einer weiteren vorteilhaften Ausgestaltung wird vorgeschlagen, dass das Dichtelement eine Bürstendichtung ist. Die Borsten der Bürstendichtung sind dabei in der Regel zumindest überwiegend von innen nach außen weisend ausgerichtet. Die Bürstendichtung ist besonders vorteilhaft, um eine gute Dichtwirkung zu ermöglichen, aber gleichwohl die Ein- und Ausbaubarkeit der Filtereinrichtung möglichst leicht zu gestalten.

Erfindungsgemäß wird vorgeschlagen, dass die zweite Zone so bemessen ist, dass diese zumindest teilweise aus der Filteraufnahme heraus ragt. Dabei überragt die zweite Zone die Filteraufnahme nach innen. Der entsprechend heraus ragende Abschnitt der zweiten Zone kann (in bestimmten Fällen) von durch den Kanal strömender Luft durchströmt werden. Dies wird insbesondere dann der Fall sein, wenn die erste Zone bereits zu einem Großteil verstopft oder bedeckt ist, sodass der Strömungswiderstand der ersten Zone über den Strömungswiderstand der zweiten Zone steigt. Somit kann eine Durchströmbarkeit des Kanals auch bei weit zugesetztem Filterelement vorteilhaft ermöglicht werden.

Nach einer weiteren vorteilhaften Ausgestaltung wird vorgeschlagen, dass die Filtereinrichtung eine längliche Grundform aufweist und in Längsrichtung (entlang ihrer längeren Seite) in die Filteraufnahme einschiebbar ist. In diesem Zusammenhang kann die Filtereinrichtung plattenförmig und länglich (in der Art eines dünnen, länglichen Quaders) sein. Insbesondere wird die Filtereinrichtung über mindestens 20 cm [Zentimeter] oder sogar über mindestens 40 cm in die Filteraufnahme eingeschoben. Bei entsprechenden Filterformen war es nach dem Stand der Technik besonders schwierig diese ausreichend abzudichten. Da bei üblichen Gummidichtungen die Reibung zu groß würde, sodass sich diese Filter zu schwer einschieben ließen.

Nach einer weiteren vorteilhaften Ausgestaltung wird vorgeschlagen, dass es sich bei der Filtereinrichtung um einen Vorfilter handelt. Dabei kann das Filterelement des Vorfilters abwaschbar sein, um insbesondere eine einfache Wartung des Vorfilters zu ermöglichen. Insbesondere handelt es sich bei dem Filterelement des Vorfilters um ein (abwaschbares) Gitter oder (Draht-)Geflecht.

Nach einer weiteren vorteilhaften Ausgestaltung wird vorgeschlagen, dass es sich bei der Filtereinrichtung um einen Vorfilter handelt, der einem Hauptluftfilter in Strömungsrichtung vorgelagert ist. Dadurch kann zum einen die Standzeit des Hauptfilters vorteilhaft erhöht werden. Zum anderen kann eine Dichtung des Hauptluftfilter gespart werden.

Dabei kann der Vorfilter ein im Vergleich zum Hauptluftfilter gröberes Filterelement aufweisen. Weiterhin kann das Filterelement des Vorfilters abwaschbar sein, um insbesondere eine einfache Wartung des Vorfilters zu ermöglichen. Insbesondere handelt es sich bei dem Filterelement des Vorfilters um ein (abwaschbares) Gitter oder (Draht-)Geflecht.

Nach einer weiteren vorteilhaften Ausgestaltung wird vorgeschlagen, dass es sich bei der Filtereinrichtung um einen Vorfilter handelt, der einem Wärmetauscher in Strömungsrichtung vorgelagert ist. Bevorzugt ist der Vorfilter sowohl dem Hauptluftfilter als auch dem Wärmetauscher in Strömungsrichtung vorgelagert. Der Wärmetauscher dient insbesondere zum Wärmeaustausch zwischen dem Zuluftkanal und dem Abluftkanal, um durch den Zuluftkanal in den Wohnraum einströmende Außenluft mit Abluft aus dem Wohnraum zu erwärmen oder zu kühlen. Hierdurch kann in vorteilhafter Weise eine Wärmerückgewinnung erreicht werden, was zu einer Energie- und Kostenersparnis beitragen kann. Zudem kann dadurch ggf. auch eine Reduktion von Feuchtigkeit in dem Wohnraum erzielt werden. Bei dem Wärmetauscher kann es sich zum Beispiel um einen Plattenwärmetauscher handeln.

Beispielhaft wird auch eine Filtereinrichtung für eine hier vorgestellte Lüftungsvorrichtung beschrieben, wobei die Filtereinrichtung derart zumindest teilweise in die Filteraufnahme einbringbar ist, dass sie im eingebrachten Zustand einen durchströmbaren Querschnitt des Kanals überspannt, wobei die Filtereinrichtung mindestens eine erste Zone und mindestens eine sich davon unterscheidende zweite Zone aufweist, wobei die zweite Zone die Filteraufnahme während eines Einbringens und im eingebrachten Zustand kontaktiert und wobei die zweite Zone mit einer höheren Flexibilität ausgestaltet ist als die erste Zone.

Die im Zusammenhang mit der Lüftungsvorrichtung erörterten Details, Merkmale und vorteilhaften Ausgestaltungen können entsprechend auch bei der hier vorgestellten Filtereinrichtung auftreten und umgekehrt. Insoweit wird auf die dortigen Ausführungen zur näheren Charakterisierung der Merkmale vollumfänglich Bezug genommen.

Die Erfindung wird nun anhand der Figuren detailliert erläutert.

Es stellen dar:
Figur 1: ein Beispiel für eine hier vorgestellte Lüftungsvorrichtung zur Lüftung eines Wohnraums in Schnittdarstellung,
Figur 2: ein Beispiel für eine Filtereinrichtung, die in der Lüftungsvorrichtung aus Figur 1 als Vorfilter dient, in Vorderansicht,
Figur 3: einen Schnitt durch die Filtereinrichtung aus Figur 2 im montierten Zustand, und
Figur 4: ein Beispiel für zwei Filtereinrichtungen, die in der Lüftungsvorrichtung aus Figur 1 als Vorfilter und Hauptluftfilter dienen können.

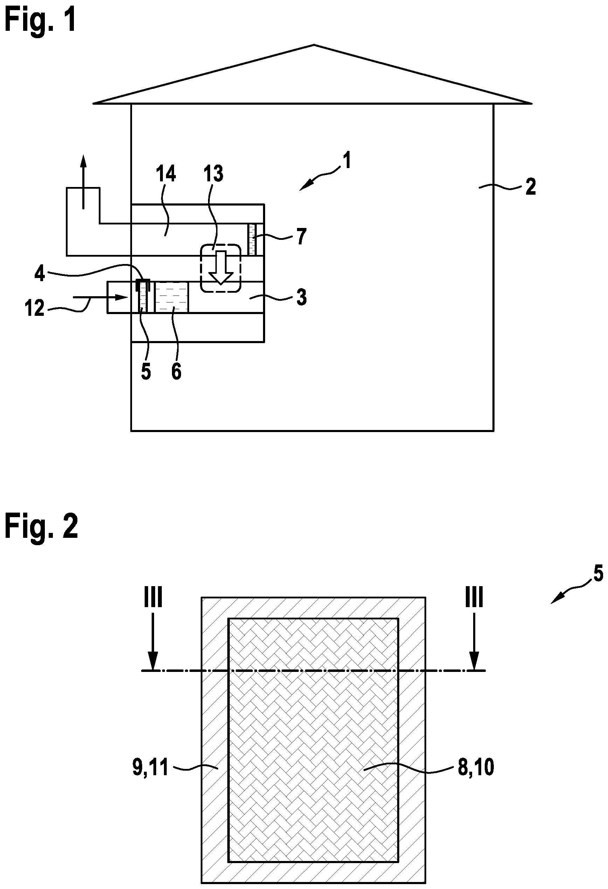

Figur 1 zeigt ein Beispiel für eine hier vorgestellte Lüftungsvorrichtung 1 zur Lüftung eines Wohnraums 2. Die Lüftungsvorrichtung 1 umfasst einen durchströmbaren Kanal 3, eine Filteraufnahme 4 und eine durchströmbare Filtereinrichtung 5. Die Filtereinrichtung 5 wirkt hier beispielhaft als Vorfilter vor einer weiteren Filtereinrichtung 6, die als Hauptluftfilter wirkt. Beide Filtereinrichtungen 5, 6 sind in dem durchströmbaren Kanal 3 angeordnet, der hier beispielhaft als Zuluftkanal dient. Bei der Filtereinrichtung 5 handelt es sich somit beispielhaft um einen Vorfilter 5, der einem Hauptluftfilter 6 in Strömungsrichtung 12 vorgelagert ist.

Zudem ist der Vorfilter 5 hier beispielhaft auch einem Wärmetauscher 13 in Strömungsrichtung 12 vorgelagert. Darüber hinaus ist beispielsweise auch ein zu dem Zuluftkanal 3 separater Abluftkanal 14 vorgesehen, in dem noch eine weitere Filtereinrichtung 7 angeordnet ist, die als Abluftfilter wirkt. Der Wärmetauscher 13 dient insbesondere zum Wärmeaustausch zwischen dem Zuluftkanal 3 und dem Abluftkanal 14, um durch den Zuluftkanal 3 in den Wohnraum 2 einströmende Außenluft mit Abluft aus dem Wohnraum 2 zu erwärmen oder zu kühlen.

Die Filtereinrichtung 5 ist derart zumindest teilweise in die Filteraufnahme 4 einbringbar, dass sie im eingebrachten Zustand einen durchströmbaren Querschnitt des Kanals 3 überspannt. In Figur 1 ist nur eine Filteraufnahme 4 gezeigt. Grundsätzlich kann jedoch jede der Filtereinrichtungen 5, 6, 7 in einer (eigenen) Filteraufnahme 4 einbringbar sein, sodass dementsprechend auch mehrere Filteraufnahmen 4 denkbar sind. Dadurch kann beispielsweise der Vorfilter 5 unabhängig von dem Hauptluftfilter 6 gewartet werden.

Figur 2 zeigt ein Beispiel für eine Filtereinrichtung, die in der Lüftungsvorrichtung aus Figur 1 als Vorfilter dient, in Vorderansicht. Es ist zu erkennen, dass die Filtereinrichtung 5 eine erste Zone 8 und eine sich davon unterscheidende zweite Zone 9 aufweist. Es ist vorgesehen, dass die zweite Zone 9 die Filteraufnahme 4 während eines Einbringens und im eingebrachten Zustand kontaktiert. Zudem ist die zweite Zone 9 mit einer höheren Flexibilität ausgestaltet ist als die erste Zone 8. Dies trägt in vorteilhafter Weise dazu bei, dass die Filtereinrichtung 5 gegenüber der Filteraufnahme 4 abgedichtet ist, aber trotzdem einfach in die Filteraufnahmen 4 eingeschoben und auch wieder aus dieser herausgezogen werden kann.

In Figur 2 ist auch gezeigt, dass die erste Zone 8 eine innere Zone und die zweite Zone 9 eine äußere Zone sein kann. Weiterhin kann die Filtereinrichtung 5 im Bereich der zweiten Zone 9 einen höheren Strömungswiderstand aufweisen als im Bereich der ersten Zone 8. Zudem ist die Filtereinrichtung 5 hier beispielhaft im Bereich der ersten Zone 8 mit einem Filterelement 10, wie etwa einem Drahtgeflecht, einem Drahtgitter oder dergleichen und im Bereich der zweiten Zone 9 mit mindestens einem Dichtelement 11 gebildet. Das Dichtelement 11 ist gemäß einer besonders bevorzugten Ausgestaltung eine Bürstendichtung.

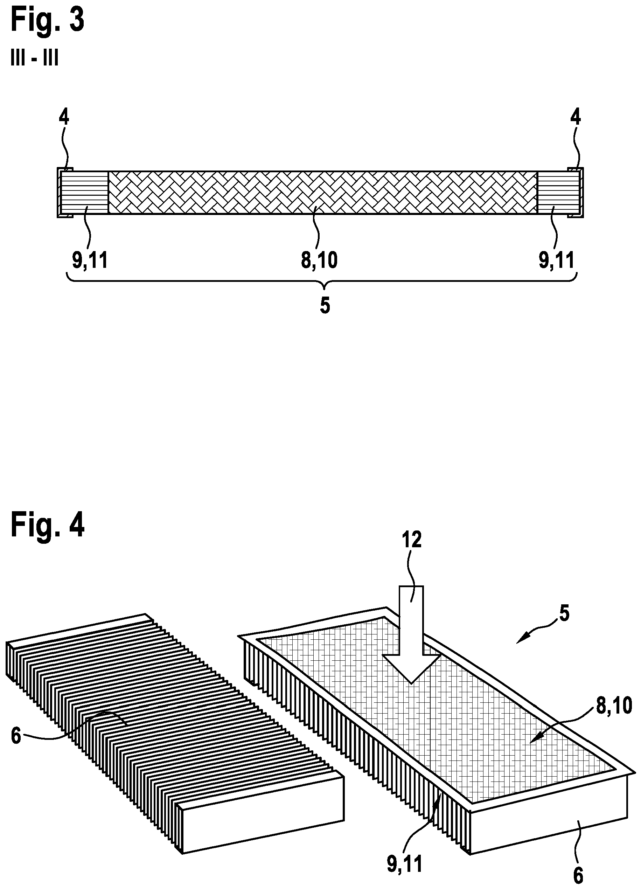

Figur 3 zeigt einen Schnitt durch die Filtereinrichtung 5 aus Figur 2 im montierten Zustand. Somit ist die Filtereinrichtung 5 hier (teilweise, nämlich im Bereich der zweiten Zone 9) in eine Filteraufnahme 4 eingebracht. Die Filteraufnahme 4 wird in diesem Zusammenhang beispielweise mit U-förmigen Profilen gebildet, in welche die Filtereinrichtung 5 eingeschoben und in der Art von Schienen geführt werden kann.

In Figur 3 ist auch gezeigt, dass die zweite Zone 9 so bemessen ist, dass diese zumindest teilweise aus der Filteraufnahme 4 heraus ragt. Dabei überragt die zweite Zone 9 hier die Filteraufnahme 4 nach innen. Der entsprechend heraus ragende Abschnitt der zweiten Zone 9 kann (in bestimmten Fällen) von durch den Kanal 3 strömender Luft durchströmt werden. Dies wird insbesondere dann der Fall sein, wenn die erste Zone 8 bereits zu einem Großteil verstopft oder bedeckt ist, sodass der Strömungswiderstand der ersten Zone 8 über den Strömungswiderstand der zweiten Zone 9 steigt. Somit kann eine Durchströmbarkeit des Kanals auch bei weit zugesetztem Filterelement 10 gewährleistet werden. Grundsätzlich sind die erste Zone 8 und die zweite Zone 9 jedoch so ausgelegt, das bei nicht zu einem Großteil verstopften oder bedeckten Filterelement 10, der Strömungswiderstand der ersten Zone 8 kleiner ist als den Strömungswiderstand der zweiten Zone 9, sodass die zweite Zone 9 ihre vorteilhafte Dichtfunktion übernehmen kann.

Figur 4 zeigt ein Beispiel für zwei Filtereinrichtungen, die in der Lüftungsvorrichtung aus Figur 1 als Vorfilter und Hauptluftfilter dienen können. In Figur 4 ist beispielhaft gezeigt, dass beide Filtereinrichtungen 5, 6, also der Vorfilter 5 und der Hauptluftfilter 6 jeweils eine längliche Grundform aufweisen können. Dabei ist insbesondere vorgesehen, dass diese in Längsrichtung in die Filteraufnahme 4 einschiebbar sind. Dabei sollte jedoch jede Filtereinrichtung 5, 6 in eine eigene Filteraufnahme 4 eingeschoben werden, um eine unabhängige Wartung der Filtereinrichtungen 5, 6 zu ermöglichen.

### Bezugszeichenliste

- 1: Lüftungsvorrichtung
- 2: Wohnraum
- 3: Kanal
- 4: Filteraufnahme
- 5: Vorfilter
- 6: Hauptluftfilter
- 7: Abluftfilter
- 8: erste Zone
- 9: zweite Zone
- 10: Filterelement
- 11: Dichtelement
- 12: Strömungsrichtung
- 13: Wärmetauscher
- 14: Kanal

## Patentansprüche

1. Lüftungsvorrichtung (1) zur Lüftung eines Wohnraums (2), umfassend mindestens einen durchströmbaren Kanal (3), mindestens eine Filteraufnahme (4) und mindestens eine durchströmbare Filtereinrichtung (5, 6, 7), wobei die Filtereinrichtung (5, 6, 7) derart zumindest teilweise in die Filteraufnahme (4) einbringbar ist, dass sie im eingebrachten Zustand einen durchströmbaren Querschnitt des Kanals (3) überspannt, wobei die Filtereinrichtung (5, 6, 7) mindestens eine erste Zone (8) und mindestens eine sich davon unterscheidende zweite Zone (9) aufweist, wobei die zweite Zone (9) die Filteraufnahme (4) während eines Einbringens und im eingebrachten Zustand kontaktiert, wobei die zweite Zone (9) mit einer höheren Flexibilität ausgestaltet ist als die erste Zone (8), wobei die Filtereinrichtung (5, 6, 7) im Bereich der ersten Zone (8) mit mindestens einem Filterelement (10) und im Bereich der zweiten Zone (9) mit mindestens einem Dichtelement (11) gebildet ist, **dadurch gekennzeichnet, dass** die zweite Zone (9) so bemessen ist, dass diese zumindest teilweise aus der Filteraufnahme (4) heraus ragt, und wobei die zweite Zone (9) dabei die Filteraufnahme (4) nach innen überragt, sodass der heraus ragende Abschnitt der zweiten Zone (9) von durch den Kanal (3) strömender Luft durchströmbar ist.

2. Lüftungsvorrichtung (1) nach Anspruch 1, wobei es sich bei der Lüftungsvorrichtung (1) um ein Wandgerät zur Wohnraumlüftung handelt.

3. Lüftungsvorrichtung (1) nach Anspruch 1 oder 2, wobei die Filtereinrichtung (5, 6, 7) im Bereich der zweiten Zone (9) einen höheren Strömungswiderstand aufweist als im Bereich der ersten Zone (8).

4. Lüftungsvorrichtung (1) nach einem der vorhergehenden Ansprüche, wobei die erste Zone (8) eine innere Zone und die zweite Zone (9) eine äußere Zone ist.

5. Lüftungsvorrichtung (1) nach einem der vorhergehenden Ansprüche, wobei das Dichtelement (11) eine Bürstendichtung ist.

6. Lüftungsvorrichtung (1) nach Anspruch 5, wobei die Borsten der Bürstendichtung zumindest überwiegend von innen nach außen weisend ausgerichtet sind, wobei die Begriffe innen und außen sich auf eine Zentrumsachse der Filtereinrichtung (5, 6, 7) beziehen, welche die vordere Stirnseite und die hintere Stirnseite durchdringt.

7. Lüftungsvorrichtung (1) nach einem der vorhergehenden Ansprüche, wobei die Filtereinrichtung (5, 6, 7) eine längliche Grundform aufweist und in Längsrichtung in die Filteraufnahme (4) einschiebbar ist.

8. Lüftungsvorrichtung (1) nach einem der vorhergehenden Ansprüche, wobei es sich bei der Filtereinrichtung (5, 6, 7) um einen Vorfilter (5) handelt.

9. Lüftungsvorrichtung (1) nach Anspruch 8, wobei ein Filterelement (10) des Vorfilters (5) ein abwaschbares Gitter oder Geflecht umfasst.

10. Lüftungsvorrichtung (1) nach Anspruch 8 oder 9, umfassend einen Hauptluftfilter (6), wobei der Vorfilter (5) dem Hauptluftfilter (6) in Strömungsrichtung (12) vorgelagert ist

11. Lüftungsvorrichtung (1) nach einem der Ansprüche 8 bis 10, umfassend einen Wärmetauscher (13), wobei der Vorfilter (5) dem Wärmetauscher (13) in Strömungsrichtung (12) vorgelagert ist.

## Claims

1. Ventilation device (1) for ventilating a living space (2), comprising at least one duct (3) through which a flow can pass, at least one filter receptacle (4) and at least one filter apparatus (5, 6, 7) through which a flow can pass, wherein the filter apparatus (5, 6, 7) can be inserted at least partially into the filter receptacle (4) such that in the inserted state it spans a cross-section of the duct (3) through which a flow can pass,
wherein the filter apparatus (5, 6, 7) has at least one first zone (8) and at least one second zone (9) different from the former, wherein the second zone (9) contacts the filter receptacle (4) during an insertion and in the inserted state, wherein the second zone (9) is configured to have greater flexibility than the first zone (8), wherein the filter apparatus (5, 6, 7) is formed in the region of the first zone (8) with at least one filter element (10) and in the region of the second zone (9) with at least one sealing element (11), **characterised in that** the second zone (9) is dimensioned such that it projects at least partially out of the filter receptacle (4), and wherein the second zone (9) thereby projects inwardly beyond the filter receptacle (4), so that the projecting portion of the second zone (9) can be flowed through by air flowing through the duct (3).

2. Ventilation device (1) according to claim 1, wherein the ventilation device (1) is a wall device for ventilating a living space.

3. Ventilation device (1) according to claim 1 or 2, wherein the filter apparatus (5, 6, 7) has a higher flow resistance in the region of the second zone (9) than in the region of the first zone (8).

4. Ventilation device (1) according to any one of the preceding claims, wherein the first zone (8) is an inner zone and the second zone (9) is an outer zone.

5. Ventilation device (1) according to any one of the preceding claims, wherein the sealing element (11) is a brush seal.

6. Ventilation device (1) according to claim 5, wherein the bristles of the brush seal are oriented at least predominantly directed from the inside to the outside, wherein the terms inside and outside refer to a central axis of the filter apparatus (5, 6, 7) which passes through the front end face and the rear end face.

7. Ventilation device (1) according to any one of the preceding claims, wherein the filter apparatus (5, 6, 7) has an elongated basic shape and can be pushed into the filter receptacle (4) in longitudinal direction.

8. Ventilation device (1) according to any one of the preceding claims, wherein the filter apparatus (5, 6, 7) is a pre-filter (5).

9. Ventilation device (1) according to claim 8, wherein a filter element (10) of the pre-filter (5) comprises a washable grid or mesh.

10. Ventilation device (1) according to claim 8 or 9, comprising a main air filter (6), wherein the pre-filter (5) is arranged upstream of the main air filter (6) in flow direction (12).

11. Ventilation device (1) according to any one of claims 8 to 10, comprising a heat exchanger (13), wherein the pre-filter (5) is arranged upstream of the heat exchanger (13) in flow direction (12).

## Revendications

1. Dispositif de ventilation (1) pour la ventilation d'un espace habitable (2), comprenant au moins un canal (3) traversable par un écoulement, au moins un logement de filtre (4) et au moins un appareil de filtration (5, 6, 7) traversable par un écoulement, dans lequel l'appareil de filtration (5, 6, 7) peut être introduit au moins partiellement dans le logement de filtre (4) de telle manière qu'il enjambe dans l'état introduit une section transversale du canal traversable par un écoulement (3),
dans lequel l'appareil de filtration (5, 6, 7) présente au moins une première zone (8) et au moins une seconde zone (9) différente de la première, dans lequel la seconde zone (9) est en contact avec le logement de filtre (4) pendant une introduction et dans l'état introduit, dans lequel la seconde zone (9) est configurée avec une flexibilité plus grande que la première zone (8), dans lequel l'appareil de filtration (5, 6, 7) est formé dans la région de la première zone (8) avec au moins un élément de filtre (10) et dans la région de la seconde zone (9) avec au moins un élément étanche (11), **caractérisé en ce que** la seconde zone (9) est dimensionnée de sorte que celle-ci fait saille au moins partiellement en dehors du logement de filtre (4), et dans lequel la seconde zone (9) fait saillie vers l'intérieur au-delà du logement de filtre (4) de sorte que la section faisant saillie par rapport à la seconde zone (9) puisse être traversée par de l'air circulant via le canal (3).

2. Dispositif de ventilation (1) selon la revendication 1, le dispositif de ventilation (1) est un appareil mural pour la ventilation d'espace habitable.

3. Dispositif de ventilation (1) selon la revendication 1 ou 2, dans lequel l'appareil de filtration (5, 6, 7) présente dans la région de la seconde zone (9) une résistance à l'écoulement supérieure à celle dans la région de la première zone (8).

4. Dispositif de ventilation (1) selon l'une quelconque des revendications précédentes, dans lequel la première zone (8) est une zone intérieure et la seconde zone (9) est une zone extérieure.

5. Dispositif de ventilation (1) selon l'une quelconque des revendications précédentes, dans lequel l'élément étanche (11) est un joint à brosse d'étanchéité.

6. Dispositif de ventilation (1) selon la revendication 5, dans lequel les poils du joint à brosse sont orientés au moins principalement tournés de l'intérieur vers l'extérieur, dans lequel les termes intérieur et extérieur se rapportent à un axe central de l'appareil de filtration (5, 6, 7) qui traverse le côté frontal avant et le côté frontal arrière.

7. Dispositif de ventilation (1) selon l'une quelconque des revendications précédentes, dans lequel l'appareil de filtration (5, 6, 7) présente une forme de base oblongue et peut être inséré dans le logement de filtre (4) dans le sens longitudinal.

8. Dispositif de ventilation (1) selon l'une quelconque des revendications précédentes, dans lequel l'appareil de filtration (5, 6, 7) est un préfiltre (5).

9. Dispositif de ventilation (1) selon la revendication 8, dans lequel un élément de filtre (10) du préfiltre (5) comporte une grille ou un maillage lavable.

10. Dispositif de ventilation (1) selon la revendication 8 ou 9, comprenant un filtre d'air principal (6), dans lequel le préfiltre (5) est logé en amont du filtre d'air principal (6) dans le sens d'écoulement (12).

11. Dispositif de ventilation (1) selon l'une quelconque des revendications 8 à 10, comprenant un échangeur de chaleur (13), dans lequel le préfiltre (5) est logé en amont de l'échangeur de chaleur (13) dans le sens d'écoulement (12).
